## Europäisches Patentamt

## European Patent Office

## Office européen des brevets

(11) Publication number: **0 078 570**
**B1**

(12) **EUROPEAN**

(45) Date of publication of patent specification: **27.01.88**

(51) Int. Cl.⁴: **A 46 D 3/08, B 65 G 47/24**

(21) Application number: **82201332.2**

(22) Date of filing: **26.10.82**

(54) **Device for orienting pieces of work, more especially brush bodies.**

(30) Priority: **04.11.81 BE 2059449**

(43) Date of publication of application:
**11.05.83 Bulletin 83/19**

(45) Publication of the grant of the patent:
**27.01.88 Bulletin 88/04**

(84) Designated Contracting States:
**DE FR GB IT**

(56) References cited:
**EP-A-0 019 942**
**DE-A-2 650 041**

(73) Proprietor: **G.B. BOUCHERIE, N.V.**
**Stuivenbergstraat 104-141**
**B-8700 Izegem (BE)**

(72) Inventor: **Boucherie, Leonel Polydore**
**Potaardestraat 3**
**B-8810 Roeselare-Rumbeke (BE)**

(74) Representative: **Donné, Eddy**
**M.F.J.Bockstael Arenbergstraat 13**
**B-2000 Anvers (BE)**

Courier Press, Leamington Spa, England.

## Description

The present invention relates to a device for orienting pieces of work, especially brush bodies, in other words a device the purpose of which is to correctly orient pieces of work in order to be able to deliver these pieces of work in a suitable position to the processing machine properly speaking.

More especially, the present invention relates to a device which is intended for orienting pieces of work as are brush bodies, in other words for locating these pieces of work, for instance in the case of brush bodies, at least with the little holes in one and the same direction, whereby, if one has to process brush bodies the little holes of which are not symmetrically located, as, for instance, is the case of tooth brushes, the brush bodies can also be turned in the length.

In this way one obtains that the person attending the processing machine must no more put the pieces of work in the machine in the correct position, in such a way that the constant presence of this person attending the machine is no more required and that this person not only can divide her attention between a number of machines, but can also assume supplementary tasks as are, for instance, the control of the products turned out and/or of their package.

Such a device according to the invention can, of course, be used as well alone as directly in combination with a processing machine.

The device according to the invention is of the type whereby, from a storage container, by means of a conveyor, pieces of work are fed one by one, and is provided with means each of which can exert action upon an end of the piece of work in order to seize same, means which can give the aforesaid means a displacement with respect to the framework of the machine, means which in the course of the aforesaid displacement detect the position of the piece of work concerned and means which allow to impart to the piece of work a 180 degrees rotation about its longitudinal axis, this device (known from EP—A—0078570 of the applicant) being characterized in that also means are provided which allow to impart to the piece of work a 180 degress rotation about an axis which is perpendicular to the longitudinal axis of the piece of work, these means being formed, at the one hand, by a pressure cylinder the outgoing piston rod of which is provided with claws which can be opened or closed through a displacement of the piston of said cylinder, and between which the piece of work can be seized in the middle thereof, and at the other hand by the cooperation of a toothed rack with a pinion, which is provided for on the aforesaid pressure cylinder, whilst the toothed rack is provided at the free end of the piston rod of a pressure cylinder which is mounted on the frame of the device.

In order better to show the characteristics of the invention, a preferred embodiment is described hereinafter, without any limitative character, reference being made to the attached drawings wherein:

Figure 1 shows a schematic perspective view of a device according to the invention;

Figures 2 through 7 show various positions of the device according to the invention;

Figures 8 and 9 show sections according to the lines VIII—VIII and IX—IX in Figure 3 respectively;

Figures 10 and 11 show sections according to lines X—X and XI—XI in Figure 5 respectively.

The device as shown in the attached drawings is intended for detecting in an appropriate way tooth brush bodies, in which little holes have been previously made, and to turn same, in the present case, about an horizontal and a vertical axis, in such a way that all the brush bodies are positioned in the same way, so that the brush bodies can be arranged absolutely at random in a storage container, after which, before being conveyed to the processing machine for planting the fibres, they become oriented if necessary by means of the device according to the invention.

For this purpose, the device according to the invention is mounted near to a conveyor, in the present case a drum 1 with therein circumferentially located grooves 2, each of which is apt to receive a brush body 3. By means of such a drum 1, which is known in itself, it is possible to extract the brush bodies 3 from an appropriate container in order, via the detecting means according to the invention, to deliver same to the processing machine.

The brush bodies 3 are arranged at random in the aforesaid container and are taken up by the drum 1 as follows.

The device according to the invention mainly consists of a frame 4 which, via suitable guides, 5 and 6 respectively, is slidably mounted, vertically in this case, with respect to the framework 7, which is schematically indicated, whereby between the parts 4 and 7 two pneumatic cylinders, 8 and 9 respectively, are provided for, which are assembled together and whereby the pistons, 10 and 11 respectively, of these cylinders, are suitably assembled with the framework 7 and the frame 4.

On the arms, 14 and 15 respectively, of the U-shaped frame 4, cylinders, 16 and 17 respectively, are mounted, the pistons of which, 18 and 19 respectively, via the piston rods 20 and 21, are provided with suitable components 22 and 23 by means of which a brush body can be seized by its ends.

On the piston rod 21 of the cylinder 17, a pinion 24 is fixed in this case, showing a width which is equal to or a little greater than the maximum displacement of the piston 19, whereby a toothed rack 25 is constantly in mesh with this pinion toothed rack which is fixed on the free end of a piston rod 26, the piston 27 of which is a part of a cylinder 28 fixed on the arm 15 of the frame 4.

The device according to the invention is being further completed by a pressure cylinder 29, which is fixed on the framework 7, the piston 30 of which, via a piston rod 31, is assembled with a toothed rack 32 which is in constant mesh with a pinion 33 the rotation shaft 34 of which is suitably assembled to a cylinder 35. The piston 36 of the latter, via the piston rod 37, is provided with claws, 38 and 39 respectively, which can seize the brush body 3 in an appropriate way, as will be explained hereinafter.

On each side of the device 33 through 39, feelers or palpating components, 40 and 41 respectively, are also provided for, which are apt to suitably operate switching means, 42 and 43 respectively.

The operation of the device according to the invention is very simple and as follows.

The brush bodies 3 which, in the present case, show in the zone of the brush hairs a heightened part 44 wherein the little holes 45 are made, are placed at random in a storage container, from where the drum 1 or another conveyor which is known in itself, takes up the brush bodies.

One obtains in this way that these brush bodies can be located in the grooves 2 of such a device 1 in four different ways, say with the part 44 oriented to the right in the drawings and the little holes 45 upwards; with the part 44 oriented to the right and the little holes 45 downwards; with the part 44 oriented to the left and the little holes 45 upwards and finally with the part 44 oriented to the left and the little holes 45 downwards, whereby in the example shown it is the position with the part 44 to the right and the little holes 45 upwards that is the position wherein the brush body is to be delivered to the manufacturing machine.

Ther drum 1 has, for instance, a constant drive motion and only stops when a brush body 3 is being placed between the pressing components 22 and 23, this situation being controlled by a photo-electric cell or similar component 46.

At this moment the pistons 18 and 19 are operated so as to move towards the brush body 3, whereby the pressing components 22 and 23 securely seize the brush body at both its ends, whereby it goes without saying that the pressing components 22 and 23, on the sides that are oriented towards the ends of the brush body, will have dimensions and shapes which are such that this brush body, whatever the position, will be securely clamped between these pressing components.

Subsequently, the pistons 10 and 11 are being operated in such a way that both move the one toward the other, whereby one obtains that the frame 4 becomes placed in its highest position.

In this position, the brush body, at this moment, comes against the feeler 40, which influences the switching component 42, whilst the feeler 41 is not being influenced.

Due to the fact that component 43 does not switch and that the component 42 does switch, a command is first given to the pistons 10 and 11 to move again the one away from the other in order to bring the frame 4 into its lowest position, whereby the brush body is put back into a groove 2, after which the pistons 18 and 19 receive the command to liberate this brush body. The drum 1 becomes driven again at this moment until when a second brush body becomes placed in front of the component 46.

Let us suppose that in this case the little brush is located on the drum 1 with the part 44 to the right in the drawings and with the little holes 45 oriented downwards.

In this case, the components 22 and 23 will also clamp the brush body, after which the pistons 10 and 11 will be operated so that the frame 4 will come into its highest position, whereby, in this case, during this displacement, both the components 40 and 41 will be pushed in, whereby there is obtained that the pistons 10 and 11 are operated to bring the frame 4 and the brush body 3 again in the lowest position, whereby during the downwards motion, piston 27 becomes also pushed out in order to obtain that via the toothed rack 25 and pinion 24 the brush body obtains a rotative motion of 180° about its longitudinal axis.

After the brush body has been placed in a groove 2, the pressing components 22, 23 are removed from the brush body and the piston 27 will be brought again into its retracted position.

When between the pressing components 22 and 23 a brush body is placed the part 44 of which is oriented to the left with the little holes 45 oriented upwards, the following components will function successively.

The pistons 18 and 19 are being commanded so that the components 22 and 23 seize a brush body. Then the pistons 10 and 11 are being commanded in order to obtain that the frame 4 comes into its highest position, whereby, in this highest position, neither the palpating component or feeler 40 nor the palpating component or feeler 41 are influenced, so that a command is being given to the piston 10, which brings the frame 4 in an intermediate position whereby the brush body is placed between the claws 38, 39, after which the piston 36 is being pushed out in order to close the claws 38 and 39 and to seize the brush body. After this a command is given to the pistons 18, 19 to liberate the brush body, after which the piston 30 receives the command to impart to the claws a rotation of 180° via the toothed rack 32 and pinion 33. At this moment, the pistons 18 and 19 are being commanded again to seize the brush body between the pressing components 22 and 23, after which, through operating the piston 36, the claws 38 and 39 are opened again so that subsequently through operating the piston 10, the frame 4 is brought again in the high position, resulting at that moment in the palpating component 40 being pushed in and palpating components 41 not being pushed in, which, as in the first example, results in both pistons 10 and 11 being operated; the frame 4 is being placed in its lowest position; the pistons 18 and 19 are being operated to liberate the brush body, whereby, in this case at this moment the piston 30 is being operated again in order to place the toothed rack in its original position.

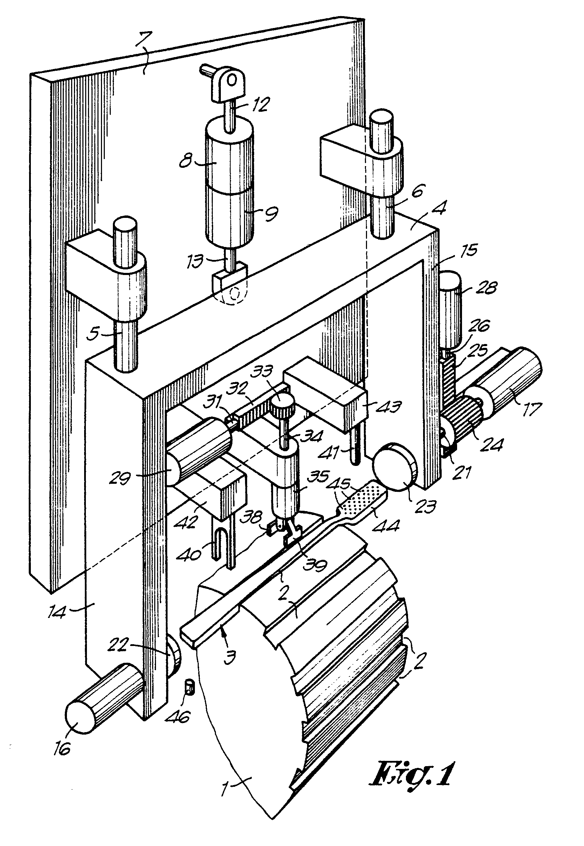

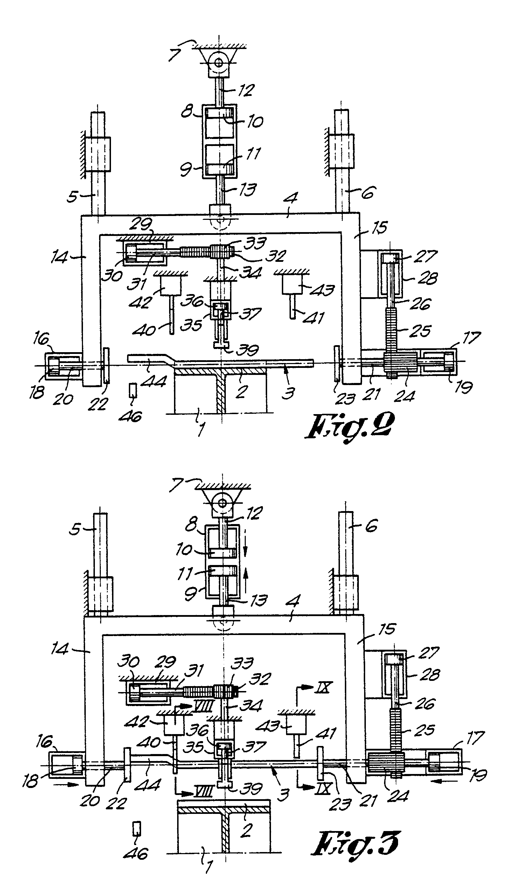

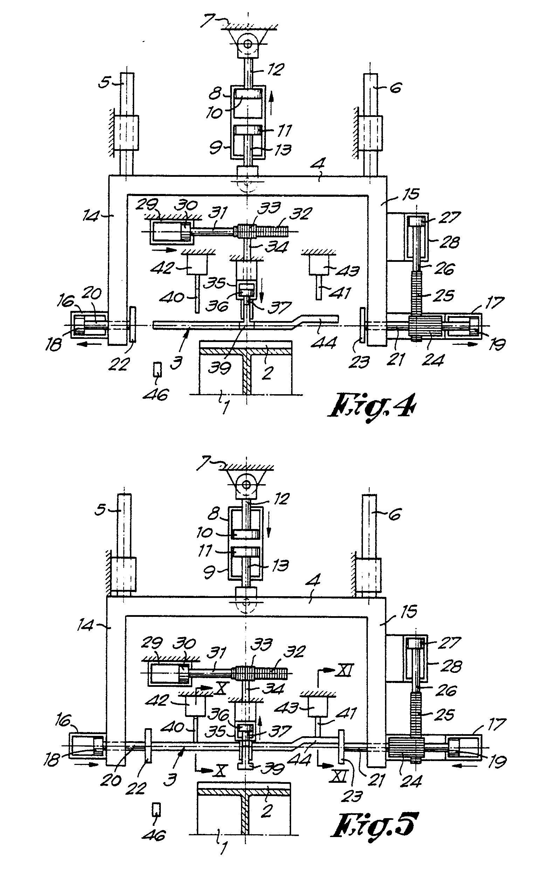

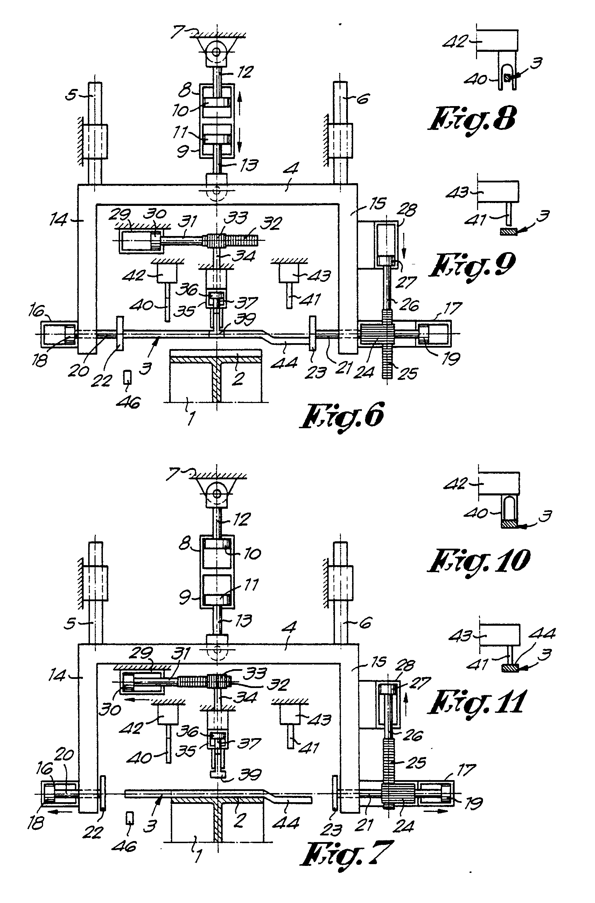

When finally we take into consideration the fourth possibility, wherein the brush body is located in a groove 2 with the part 44 oriented to the left in the drawings and the little holes of the brush oriented downwards, situation which is shown in the Figures 2 through 11, and from where the situations mentioned hereinabove can be deduced, one obtains that in a first stage the pressing components 22 and 23 seize the brush body, after which through the operation of the pistons 10 and 11 one obtains the position as shown in Figure 3 with the frame 4 in its highest position. Subsequently, cylinder 10 becomes operated, see Figure 4, and after operating respectively the piston 36, which results in closing the claws 38 and 39, and operating the piston 30, which results in a 180° rotation of the cylinder 35, the position is reached as shown in Figure 4, after which the brush body, by means of the components 22 and 23 is being seized again and both the feeler components 40 and 41 are influenced which operate the switching components 42 and 43. This results in the pistons 10 and 11 being operated in such a way that the frame 4 moves downwards, whereby during this motion the piston 27 is being also operated, whereby one obtains that before the brush body is placed back into the drum 1, this brush body is being rotated over 180° about its longitudinal axis. At this moment, the pistons 18 and 19 are finally operated, due to which the brush body is liberated and the pistons 27 and 30 will be operated in order to bring them both into their starting position.

As clearly appears from the preceding explanations, one obtains in this way a palpating device, whereby, depending on the position of the brush body, two feeler components 40 and 41 are or are not being displaced, either because in certain positions a distance is being kept between a brush body and the feeler components or, in another execution, as is for instance the case for the feeler component 40, the latter is made with a U-shape so that in one position the brush body presses against the component and in another position this brush body can simply move in the space between the legs of the component.

It is clear that the feelers may have any shape, depending on the shape of the brush body, whereby, in the case of a truly rectangular flat brush body, which may be considered as an extreme case, the feelers 40 and 41 shall be made in such a way that they perform the palpating operations through acting in the little holes 45.

The reason why at least the piston 30 always moves back to its original position is that when one has to do with brush bodies which seen from above have not a straight shape, which is mostly the case, the claws 38 and 39 will be adapted to this situation in such a way that these claws, when they are not brought into the initial position, may act incorrectly upon the brush body and bring it in a wrong position.

It is clear that the present invention is not at all limited to the embodiments described as examples and illustrated in the attached drawings.

**Claims**

1. Device for orienting pieces of work (3), especially brush bodies (3), of the type whereby, from a storage container, by means of a conveyor, pieces of work (3) are fed one by one, this device being provided with means (22, 23), each of which can exert an action upon an end of the piece of work (3) in order to seize same, means (4, 8 through 13) which can give the aforesaid means (22, 23) a displacement with respect to the framework (7) of the machine, means (40, 41, 46) which in the course of the aforesaid displacement detect the position of the piece of work (3) concerned and means (28, 27, 26, 25, 24) which allow to impart to the piece of work a 180 degrees rotation about its longitudinal axis, characterized in that also means (29 through 39) are provided which allow to impart to the piece of work a 180 degrees rotation about an axis which is perpendicular to the longitudinal axis of the piece of work, these means being formed, at the one hand, by a pressure cylinder (35) the outgoing piston rod (37) of which is provided with claws (38—39) which can be opened or closed through a displacement of the piston of said cylinder (35) and between which the piece of work (3) can be seized in the middle thereof, and at the other hand by the cooperation of a toothed rack (32) with a pinion (33), which is provided for on the aforesaid pressure cylinder (35), whilst the toothed rack (32) is provided at the free end of the piston rod (31) of a pressure cylinder (29) which is mounted on the frame (4) of the device.

2. Device according to claim 1, characterized in that it mainly consists of an inverted U-shaped frame (4), this frame being provided with the said means (22, 23) which can exert an action on an end of a piece of work (3) in order to seize same, with the said means (24, 25, 26, 27, 28) which allow to impart to the piece of work (3) a rotation of 180 degrees about its longitudinal axis, with the claws (38, 39) which allow to seize the piece of work (3) in the middle and with the means (29 through 39) which allow to impart to the piece of work (3) a rotation of 180 degrees about an axis which is perpendicular to the longitudinal axis of the piece of work.

3. Device according to claim 2, characterized in that the U-shaped frame (4) is positively displaceable by means of suitable guides (5, 6) with respect to the framework (7) of the machine.

4. Device according to claim 1, 2 or 3, characterized in that the means (22, 23) exerting an action upon the ends of a piece of work (3) are two air pressure cylinders (16, 17) one of them being on one side and the other being on the other side of the piece of work (3) whereby each of the free ends of the piston (20, 21) rods of the air pressure cylinders (16, 17) is provided with a pressing component (22, 23) which eventually is profiled in an appropriate way with respect to the shape of the piece of work (3).

5. Device according to one of the preceding claims, characterized in that the means (4 through 13) which can give the aforesaid pressing components (22, 23) a displacement with respect to the framework (7) of the machine is formed by a pressure cylinder (8, 9) which is fixed to the frame (4) and the framework (7) of the machine.

6. Device according to claim 5, characterized in that the aforesaid pressure cylinder is a double cylinder (8, 9).

7. Device according to one of the preceding claims, characterized in that the means (40, 41) which detect the piece of work (3) in the course of the displacement of the frame (4) are formed by a palpating component or feeler (40, 41) located near to each end of the piece of work (3) concerned, which is apt to suitably act upon a switching component (42, 43).

8. Device according to claim 7, characterized in that the feeler (41) is formed by a simple pin.

9. Device according to claim 7, characterized in that the feeler (40) is formed by a U-shaped component, the dimensions of which are such that in a certain position the piece of work (3) presses against the feeler (40), whilst in another position the brush body (3) can freely move in the space between the legs of the feeler (40).

10. Device according to claim 8, characterized in that the feeler (41) is formed by a pin with a pointed end which is apt to cooperate with the little holes or the like in the piece of work (3).

11. Device according to one of the preceding claims, characterized in that the means (24 through 28) which allow to impart to the piece of work (3) a rotation of 180 degrees about its longitudinal axis are formed by a pinion (24) provided for on one (21) of the piston rods which seize the piece of work at one end by means of the pressing component (23) and a toothed rack (25) in mesh with the pinion (24), which is assembled with the free end of the piston rod (26) of the piston (27) of a pressure cylinder (28) which is mounted on the U-shaped frame (4).

12. Device according to claim 11, characterized in that the pinion (24) has a width which is equal to or a little greater than the maximum displacement of the piston rod (21) on which it is mounted.

13. Device according to claim 1, characterized in that the claws (38, 39) are profiled in a way corresponding to the profile of the piece of work (3).

14. Device according to one of the preceding claims, characterized in that one (46) of the detecting means (40, 41, 46) is a photo-electric cell (46) controlling the supply of the pieces of work (3).

**Patentansprüche**

1. Vorrichtung zum Orientieren von Werkstücken (3), insbesondere von Bürstenkörpern (3) des Typs, wobei aus einem Vorratsbehälter Werkstücke (3) eines nach dem anderen mittels eines Fördermittels zugeführt werden, und diese Vorrichtung mit Mitteln (22, 23) versehen ist, von denen jedes zum Ergreifen des Werkstücks (3) auf ein Ende desselben einzuwirken vermag, mit Mitteln (4, 8 bis 13), welche imstande sind, die genannten Mittel (22, 23) gegenüber dem Tragwerk (7) der Maschine zu versetzen, mit Mitteln (40, 41, 46), welche im Laufe dieser Versetzung die Position des betreffenden Werkstücks (3) ermitteln, und mit Mitteln (28, 27, 26, 25, 24), welche dem Werkstück eine Rotation um 180° um dessen Längsachse verleihen können, dadurch gekennzeichnet, daß auch Mittel (29 bis 39) vorgesehen sind, welche dem Werkstück eine Rotation um 180° um eine zur Längsachse des Werkstücks senkrechte Achse verleihen können, welche Mittel einerseits aus einem Druckzylinder (35) gebildet sind, dessen abgehende Kolbenstange (37) mit Klauen (38, 39) versehen ist, die durch eine Verschiebung des Kolbens des Zylinders (35) geöffnet bzw. geschlossen werden können, und zwischen denen das Werkstück (3) in der Mitte ergriffen werden kann, und andererseits durch die Zusammenarbeit einer Zahnstange (32) mit einem Ritzel (33), welches am Druckzylinder (35) versehen ist, während die Zahnstange (32) am freien Ende der Kolbenstange (31) eines Druckzylinders (29) versehen ist, der auf dem Rahmen (4) der Vorrichtung montiert ist.

2. Vorrichtung nach Anspruch 1, dadurch gekennzeichnet, daß sie zur Hauptsache aus einem Rahmen (4) in der Form einer umgekehrten U besteht, wobei dieser Rahmen mit den Mitteln (22, 23) ausgerüstet ist, die zum Ergreifen eines Werkstücks (3) auf ein Ende des letzteren einwirken können, mit den Mitteln (24, 25, 26, 27, 28), welche dem Werkstück (3) eine Rotation um 180° um dessen Längsachse verleihen können, mit den Klauen (38, 39), welche das Werkstück (3) in dessen Mitte ergreifen können, und mit den Mitteln (29 bis 39), welche dem Werkstück (3) eine Rotation um 180° um eine Achse verleihen können, welche senkrecht zur Längsachse des Werkstücks steht.

3. Vorrichtung nach Anspruch 2, dadurch gekennzeichnet, daß der U-förmige Rahmen (4) gegenüber dem Tragwerk (7) der Maschine mittels geeigneter Führungen (5, 6) zwangsläufig versetzt werden kann.

4. Vorrichtung nach Anspruch 1, 2 oder 3, dadurch gekennzeichnet, daß die auf die Enden des Werkstücks (3) einwirkenden Mittel (22, 23) zwei Druckluftzylinder (16, 17) sind, von denen sich einer an der einen Seite und der andere sich an der anderen Seite des Werkstücks (3) befindet, wobei jedes der freien Enden der Kolbenstangen (20, 21) der Druckluftzylinder (16, 17) mit einem Druckelement (22, 23) versehen ist, das gegebenenfalls auf geeignete Weise in Bezug auf die Form des Werkstücks (3) profiliert ist.

5. Vorrichtung nach einem der vorangehenden Ansprüche, dadurch gekennzeichnet, daß das Mittel (4 bis 13), welches die Druckelemente (22, 23) gegenüber dem Tragwerk (7) der Maschine versetzen kann, durch einen Druckzylinder (8, 9) gebildet ist, welcher am Rahmen (4) und am Tragwerk (7) der Maschine befestigt ist.

6. Vorrichtung nach Anspruch 5, dadurch gekennzeichnet, daß der Druckzylinder ein Doppelzylinder (8, 9) ist.

7. Vorrichtung nach einem der vorangehenden Ansprüche, dadurch gekennzeichnet, daß die Mittel (40, 41), welche das Werkstück (3) im Laufe der Versetzung des Rahmens (4) detektieren, durch eine Spürkomponente oder einen Fühler (40, 41) gebildet werden, die bzw. der in der Nähe jedes Endes des betreffenden Werkstücks (3) lokalisiert ist, welche bzw. welcher auf entsprechende Weise auf ein Schaltglied (42, 43) einzuwirken vermag.

8. Vorrichtung nach Anspruch 7, dadurch gekennzeichnet, daß der Fühler (41) durch einen einfachen Stift gebildet wird.

9. Vorrichtung nach Anspruch 7, dadurch gekennzeichnet, daß der Fühler (40) durch eine U-förmige Komponente gebildet wird, deren Abmessungen derartig sind, daß in einer gewissen Position das Werkstück (3) gegen den Fühler (40) drückt, während in einer anderen Position der Bürstenkörper (3) im Raum zwischen den Schenkeln des Fühlers (40) frei beweglich ist.

10. Vorrichtung nach Anspruch 8, dadurch gekennzeichnet, daß der Fühler (41) durch einen Stift mit Spitzende gebildet ist, die mit den kleinen Löchern oder dergleichen im Werkstück (3) zusammenarbeiten kann.

11. Vorrichtung nach einem der vorangehenden Ansprüche, dadurch gekennzeichnet, daß die Mittel (24 bis 28), welche dem Werkstück (3) eine Rotation um 180° um dessen Längsachse verleihen können, durch ein auf eine (21) dre Kolbenstangen vorgesehenes Ritzel (24) gebildet werden, welche Kolbenstangen das Werkstück an einem Ende mittels der Druckelemente (23) und einer in das Ritzel (24) eingreifenden Zahnstange (25) ergreifen, welches Ritzel (24) mit dem freien Ende der Kolbenstange (26) des Kolbens (27) eines Druckzylinders (28) montiert ist, der auf den U-förmigen Rahmen (4) montiert ist.

12. Vorrichtung nach Anspruch 11, dadurch gekennzeichnet, daß die Breite des Ritzels (24) gleich groß ist wie oder ein wenig größer ist als die maximale Versetzung der Kolbenstange (21), auf die es montiert ist.

13. Vorrichtung nach Anspruch 1, dadurch gekennzeichnet, daß die Klauen (38, 39) profiliert sind in einer Weise, die dem Profil des Werkstücks (3) entspricht.

14. Vorrichtung nach einem der vorangehenden Ansprüche, dadurch gekennzeichnet, daß eines (46) der Fühlermittel (40, 41, 46) eine photoelektrische Zelle (46) ist, welche die Zufuhr der Werkstücke (3) steuert.

**Revendications**

1. Dispositif en vue d'orienter des pièces de travail (3), en particulier, des corps de brosses (3), dispositif selon lequel, au moyen d'un transporteur, des pièces de travail (3) sont amenées une à une d'un réceptacle d'emmagasinage, ce dispositif comportant des moyens (22, 23) pouvant agir chacun sur une extrémité de la pièce de travail (3) afin de saisir celle-ci, des moyens (4, 8 à 13) pouvant déplacer les moyens précités (22, 23) par rapport à l'ossature (7) de la machine, des moyens (40, 41, 46) qui, au cours du déplacement précité, détectent la position de la pièce de travail (3) concernée, ainsi que des moyens (28, 27, 26, 25, 24) permettant d'imprimer, à la pièce de travail, une rotation sur 180° autour de son axe longitudinal, caractérisé en ce qu'il comporte également des moyens (29 à 39) permettant d'imprimer, à la pièce de travail, une rotation sur 180° autour d'un axe qui est perpendiculaire à l'axe longitudinal de cette pièce de travail, ces moyens étant formés, d'une part, par un cylindre à pression (35) dont la tige de piston de sortie (37) comporte des mâchoires (38, 39) qui peuvent être ouvertes ou fermées par un déplacement du piston de ce cylindre (35) et entre lesquelles la pièce de travail (3) peut être saisie en son milieu, et, d'autre part, par la coopération d'une crémaillère (32) avec un pignon (33), lequel est prévu sur le cylindre à pression précité (35), tandis que la crémaillère (32) est prévue à l'extrémité libre de la tige de piston (31) d'un cylindre à pression (29) monté sur le bâti (4) du dispositif.

2. Dispositif selon la revendication 1, caractérisé en ce qu'il est constitué principalement d'un bâti (4) sous forme d'un U renversé, ce bâti comportant les moyens précités (22, 23) qui peuvent agir sur une extrémité d'une pièce de travail (3) afin de la saisir, les moyens précités (24, 25, 26, 27, 28) permettant d'imprimer, à la pièce de travail (3), une rotation sur 180° autour de son axe longitudinal, les mâchoires (38, 39) permettant de saisir la pièce de travail (3) en son milieu, ainsi que les moyens (29 à 39) permettant d'imprimer, à la pièce de travail (3), une rotation sur 180° autour d'un axe qui est perpendiculaire à l'axe longitudinal de cette pièce de travail.

3. Dispositif selon la revendication 2, caractérisé en ce qu'un déplacement desmodromique peut être imprimé au bâti en U (4), au moyen de guides appropriés (5, 6), par rapport à l'ossature (7) de la machine.

4. Dispositif selon la revendication 1, 2 ou 3, caractérisé en ce que les moyens (22, 23) agissant sur les extrémités d'une pièce de travail (3) sont deux cylindres à pression pneumatique (16, 17), l'un d'eux étant situé d'un côté de la pièce de travail (3) et l'autre, de l'autre côté de celle-ci, de telle sorte que chacune des extrémités libres des tiges de pistons (20, 21) des cylindres à pression pneumatique (16, 17) comporte un élément de pressage (22, 23) qui, en définitive, est profilé de manière appropriée par rapport à la configuration de la pièce de travail (3).

5. Dispositif selon l'une quelconque des revendications précédentes, caractérisé en ce que les moyens (4 à 13) pouvant déplacer les éléments de pressage précités (22, 23) par rapport à l'ossature (7) de la machine sont formés par un cylindre à pression (8, 9) qui est fixé au bâti (4) et à l'ossature (7) de la machine.

6. Dispositif selon la revendication 5, caractérisé en ce que le cylindre à pression précité est un cylindre double (8, 9).

7. Dispositif selon l'une quelconque des revendications précédentes, caractérisé en ce que les moyens (40, 41) qui détectent la pièce de travail (3) au cours du déplacement du bâti (4), sont formés par un élément de palpage ou un tâteur (40, 41) situé à proximité de chaque extrémité de la pièce de travail (3) concernée, cet élément palpeur ou ce tâteur pouvant agir, comme il convient, sur un élément de commutation (42, 43).

8. Dispositif selon la revendication 7, caractérisé en ce que le tâteur (41) consiste en une broche simple.

9. Dispositif selon la revendication 7, caractérisé en ce que le tâteur (40) est formé par un élément en U dont les dimensions sont calculées de telle sorte que, dans une certaine position, la pièce de travail (3) vienne à exercer une pression contre le tâteur (40) tandis que, dans une autre position, le corps de brosse (3) peut se déplacer librement dans l'espace ménagé entre les branches du tâteur (40).

10. Dispositif selon la revendication 8, caractérisé en ce que le tâteur (41) est formé par une broche à extrémité pointue, qui peut coopérer avec les petits trous ou analogues, ménagés dans la pièce de travail (3).

11. Dispositif selon une des revendications précédentes, caractérisé en ce que les moyens (24 à 28) permettant d'imprimer, à la pièce de travail (3), une rotation sur 180° autour de son axe longitudinal, sont formés par un pignon (24) prévu sur une (21) des tiges de pistons qui saisissent la pièce de travail à une extrémité au moyen de l'élément de pressage (23) et une crémaillère (25) en prise avec le pignon (24) qui est assemblé à l'extrémité libre de la tige (26) du piston (27) d'un cylindre à pression (28) qui est monté sur le bâti en U (4).

12. Dispositif selon la revendication 11, caractérisé en ce que le pignon (24) a une largeur qui est égale ou légèrement supérieure à la course maximale de la tige de piston (21) sur laquelle il est monté.

13. Dispositif selon la revendication 1, caractérisé en ce que les mâchoires (38, 39) sont profilées en fonction du profil de la pièce de travail (3).

14. Dispositif selon une des revendications précédentes, caractérisé en ce qu'un (46) des moyens de détection (40, 41, 46) est une cellule photoélectrique (46) contrôlant l'alimentation des pièces de travail (3).

*Fig.1*

Fig.2

Fig.3

*Fig.4*

*Fig.5*

0 078 570

Fig.8

Fig.9

Fig.6

Fig.10

Fig.11

Fig.7

4